# EUROPEAN PATENT SPECIFICATION

(11) **EP 0 693 091 B1**
(45) Date of publication and mention of the grant of the patent: **15.10.1997**
(21) Application number: 94928693.4
(22) Date of filing: 08.04.1994
(51) Int. Cl.: C08L 23/08, A63B 37/00

(54) **COMPOSITION FOR A COVER MATERIAL OF A GOLF BALL**
GOLFBALLHÜLLE
COMPOSITION DE MATERIAU DE REVETEMENT POUR BALLE DE GOLF

(30) Priority: 08.04.1993 JP 82128/93
(43) Date of publication of application: 24.01.1996
(73) Proprietor: E.I. DU PONT DE NEMOURS AND COMPANY, Wilmington Delaware 19898 (US)
(72) Inventor: IWASE, Yoshiyuki, Chiba 299-01 (JP); FUJITA, Sumio, Chiba 299-01 (JP); HIRASAWA, Eisaku, Chiba 290 (JP)
(74) Representative: von Kreisler, Alek, Dipl.-Chem.
(86) International application number: US9403898
(87) International publication number: WO9424204

(56) References cited:
- FR-A- 2 625 909

## Description

### BACKGROUND OF THE INVENTION

### FIELD OF THE INVENTION

This invention relates to a composition for a cover of a golf ball. More specifically, it relates to a composition for a cover material of a golf ball suitable for the production of golf balls which are easy to control, and have excellent softness and rebound resilience.

### PRIOR ART AND ITS PROBLEMS

Golf balls having balata as a cover material have advantages that they have an excellent feel when struck by a golf club and are easy to control. They are especially preferred by the more skilled golfers, but have the defect that they have poor durability. The art teaches golf balls having improved cut resistance and having similar advantages to balata covered golf balls can be made by using a blend of a hard ionomer and a soft ionomer as a cover material (Research Disclosure 27103 (November 1987), Japanese Laid-Open patent Publication No. 308577/1989, and Japanese Laid Open Patent Publication No. 3931/1993).

This art relates to blends of ionomers. What has been specifically considered have a somewhat higher hardness than balata. Cover materials having the same hardness as balata or having a hardness less than that of balata are desired. Also, higher rebound resilience with low hardness is desired.

The present invention obtains a golf ball cover material having a high rebound resilience but a low hardness. The inventors have found that golf balls having a cover material made by compounding (A) and (B) components as defined below in a predetermined ratio has the desired properties. It is possible to design quality in a wide range in a balance of hardness and rebound resilience.

### SUMMARY OF INVENTION

According to this invention, a composition which comprises 20 to 80 parts by weight of component (A) and 80 to 20 parts by weight of component (B) is used as a cover material of a golf ball. Component (A) comprises metal salts of an ethylene/ethylenically unsaturated monocarboxylic acid copolymer having an ethylenically unsaturated monocarboxylic acid content of 10 to 30% by weight and a degree of neutralization of at least 25 mole %. Component (B) comprises an ethylene/(meth) acrylate ester/ethylenically unsaturated monocarboxylic acid terpolymer having a (meth) acrylate ester content of 12 to 45% by weight and an ethylenically unsaturated monocarboxylic acid content of 0.5 to 5% by weight.

In the present invention, by compounding a specified component (B), that is, an ethylene/(meth) acrylate ester/unsaturated monocarboxylic acid terpolymer having a (meth) acrylate ester content of 12 to 45% by weight and an unsaturated monocarboxylic acid content of 0.5 to 5% by weight, with a specified component (A), that is, an ionomer having a degree of neutralization of at least 25 mole% of an ethylene/unsaturated monocarboxylic acid copolymer having an unsaturated monocarboxylic acid content of 10 to 30% by weight, softness can be imparted to the cover of a golf ball without significant reductions in rebound resilience.

By avoiding the use of an ionomer as component (B) as is provided in the art and by substituting the component (B) of the present invention, the golf ball obtained has excellent economy. Also, by doing so, the defects of decreased resilience and sacrifice of carrying distance experienced when the soft golf ball cover material is composed of two ionomer components are overcome without losing the advantageous controllability of a ball and a feeling when hit with a golf club.

In the present invention, by selecting component (B), the ethylene/(meth(acrylate ester/unsaturated monocarboxylic acid terpolymer, and compounding it with component (A), the copolymer ionomer, we have succeeded in increasing softness without significantly decreasing rebound resilience. That is to say, a golf ball with the cover made using the composition of this invention has good controllability, good feel and excellent ball carrying distance when hit with a golf club.

### PREFERRED EMBODIMENTS OF THE INVENTION

Component (A), the metal salts of the ethylene/unsaturated monocarboxylic acid copolymer, has an unsaturated monocarboxylic acid content of 10 to 30 % by weight, preferably 13 to 25% by weight, and is an ionomer which is neutralized with metal cations so that the degree of neutralization of the ethylene/unsaturated monocarboxylic acid copolymer is at least 25 mole %, preferably 30 to 80 mole %. The unsaturated monocarboxylic acids preferable include aliphatic monocarboxylic acids with 3 to 8 carbon atoms. Acrylic acid and methacrylic acid are especially preferred.

Copolymers having an unsaturated monocarboxylic acid content smaller than the above-mentioned range are not preferred because the resulting compositions have lower rebound resilience. Furthermore, when copolymers having an unsaturated monocarboxylic acid content exceeding 30% by weight are used, moisture absorption becomes higher and it is not preferred.

Component (A) can comprise blends of two or more copolymers. The degree of neutralization in this case may be adjusted so that the degree of neutralization of the blend as a whole becomes at least 25 mole %.

Examples of metal cation species in the ionomer include monovalent metal cations such as lithium, sodium, and potassium, and divalent metals such as magnesium, calcium and zinc. The ionomers may be only one kind of metal salts, but preferably, the metal salts may be a mixture containing at least one kind of monovalent metal cation and at least one kind of the divalent metal cation. The ratio of the monovalent metal salts to the divalent metal salts may be in the range of 9:1 to 1:9, preferably 7:3 to 3:7 by weight.

Degree of neutralization in the ionomer of less than 25 mole % is not preferred because the resulting composition would not have good rebound resilience and cutting resistance.

The copolymer which is partially neutralized to form component (A) may be produced by copolymerizing ethylene with the unsaturated monocarboxylic acid at a high temperature under a high pressure using a radical initiator. This production method is already well known.

Component (A) ionomer preferably has a melt flow rate of 0.1 to 30 g/10 minutes, especially 0.5 to 15 g/10 minutes, at 190°C under a load of 2160 g. Preferably, it has a Shore D hardness of 50 to 80, especially 55 to 75.

Component (B), the ethylene/(meth)acrylate ester/unsaturated monocarboxylic acid terpolymer used in this invention, has a (meth) acrylate ester content of 12 to 45% by weight, preferably 15 to 40% by weight, and an unsaturated monocarboxylic acid content of 0.5 to 5% by weight, preferably 1 to 4.5% by weight. By (meth) acrylate ester, it is meant an acrylate ester and or a methacrylate ester. Specific examples include ester groups having alkyl groups of 4 to 12 carbon atoms such as methyl acrylate, ethyl acrylate, isobutyl acrylate, n-butyl acrylate, 2-ethyl hexyl acrylate, methyl methacrylate, and isobutyl methacrylate.

Typical examples of the unsaturated monocarboxylic acid in component (B) terpolymer include those having about 3 to 10 carbon atoms, for example acrylic acid, methacrylic acid, and monoalkyl esters of dicarboxylic acids such as monomethyl maleate, monoethyl maleate, and monoisobutyl maleate. Among these, it is preferred to select monoalkyl esters of dicarboxylic acids.

Component (B) terpolymers can be obtained by copolymerizing the respective monomers at a high temperature under high pressure using a radical initiator. This production method is widely known.

If component (B) terpolymer has a (meth) acrylate ester content lower than the above-mentioned range, it is difficult to obtain a fully soft composition. Furthermore, when a component (B) terpolymer has a (meth) acrylate ester content higher than the above-mentioned range, the compositions becomes too soft, and unpreferably the cutting resistance becomes poor.

If component (B) terpolymer has an unsaturated monocarboxylic acid content lower than the above-mentioned range, its compatibility with component (A) becomes poor, and unpreferably the cutting resistance becomes poorer. Furthermore, when component (B) terpolymer has an unsaturated monocarboxylic acid content higher than the above-mentioned range, unpreferably the rebound resilience becomes poor.

Preferably, the component (B) terpolymer has a melt flow rate of 0.1 to 30g/10 minutes at 190°C under a load of 2160 g, especially 0.3 to 20 g/10 minutes, and a Shore D hardness of not more than 45, especially 10 to 35.

Typical examples of preferred component (B) terpolymers include ethylene/acrylic acid/methyl acrylate terpolymer, ethylene/acrylic acid/isobutyl acrylate terpolymer, and ethylene/methacrylic acid/isobutyl acrylate terpolymer, and ethylene/methacrylic acid/n-butyl acrylate terpolymer, ethylene/methyl acrylate/monomethyl maleate random terpolymer, ethylene/methyl acrylate/monomethyl/maleate random terpolymer, ethylene/methyl acrylate/monoethyl maleate random terpolymer, and ethylene/methyl methacrylate/monomethyl maleate random terpolymer. Component (B) may be a blend of two or more components.

The ratio of the component (A) metal salts of an ethylene/unsaturated monocarboxylic acid copolymer to the component (B) terpolymer is 20 to 80 parts by weight, preferably 30 to 70 parts by weight, to 80 to 20 parts by weight, preferably 70 to 30 parts by weight. When the unsaturated monocarboxylic acid in the terpolymer is an unsubstituted monocarboxylic acid, preferably component (A) is 50 to 80 parts by weight, more preferably 55 to 70 parts by weight, and the amount of component (B) is 50 to 20 parts by weight, especially 45 to 30 parts by weight. By compounding component (A) with component (B) in such proportions, a composition having excellent softness and rebound resilience can be obtained.

Other polymers may be compounded in the composition of this invention within small ranges which do not impair the objects of the present invention. Various additives usually compounded into golf ball cover material may be added. Examples of such additives are various coloring agents, inorganic fillers, antioxidants, and weather resistance stabilizers. Typical additives may include pigments such as titanium oxide, zinc oxide, barium sulfate and zinc sulfate, various dyes, and colors.

The composition of this invention (containing no additives) preferably has a Shore D hardness of 30 to 60, especially 32 to 58, a stiffness of 40 to 200 MPa, especially 45 to 190 MPa, and a rebound resilience of at least 52, especially at least 54.

The resin composition of this invention may be used as a cover material of a three-piece golf ball and a two-piece golf ball.

The three-piece golf ball consists of a center, a rubber thread wound up on the center and a cover on it. The cover material of this invention may be molded onto the thread-wound center of a three-piece ball employing techniques known in the art, particularly compression molding half shells over the thread-wound center. Various dimple patterns can be molded into the cover.

The two piece golf ball consists of a core and a cover thereon. The cover material of this invention may be molded onto the core of a two-piece ball employing techniques known in the art, particularly injection molding the cover material onto the core supported on retractable pins in a cavity of an injection mold to form a two-piece golf ball. Various dimple patterns can be molded into the cover.

### EXAMPLES

The present invention will be illustrated by the following examples. The compositions used in the examples are as shown in Table 1.

**TABLE I**

| | Composition | Melt Flow MFR (g/10 min.) | Hardness Shore D (23° C) | Rebound Resilience (%) |
|---|---|---|---|---|
| Ethylene Ionomer A | 30 mole % sodium neutralized ethylene/methacrylic acid (85/15 wt.%) copolymer | 2.8 | 61 | 63 |
| Ethylene Ionomer B | 60 mole % zinc neutralized ethylene/methacrylic acid (80/20 wt.%) copolymer | 0.7 | 60 | 57 |
| Ethylene Ionomer C | 60 mole % sodium neutralized ethylene/methacrylic acid (80/20 wt.%) copolymer | 1.0 | 67 | 68 |
| Ethylene Ionomer D | 52 mole % lithium neutralized ethylene/methacrylic acid (85/15 wt.%) copolymer | 1.0 | 63 | 67 |
| Ethylene copolymer E | 54 mole % magnesium neutralized ethylene/methacrylic acid (85/15 wt.%) copolymer | 0.7 | 62 | 64 |
| Ethylene terpolymer A | Ethylene/methyl acrylate/monoethyl maleate (74.7/2/2.3 wt %) terpolymer | 3.6 | 19 | 60 |
| Ethylene terpolymer B | Ethylene/methacrylic acid/isobutyl acrylate (74/2/24 wt. %) terpolymer | 5.0 | 25 | 53 |
| Ethylene terpolymer C | ethylene/methacrylic acid/isobutyl acrylate (76/4/20 wt %) terpolymer | 12.0 | 30 | 45 |
| Ethylene terpolymer D | Ethylene/methacrylic acid/isobutyl acrylate (72/8/20 wt %) terpolymer | 25.0 | 25 | 43 |
| Ethylene terpolymer E | Ethylene/methacrylic acid/isobutyl acrylate (85/5/10 wt %) terpolymer | 10.0 | 40 | 36 |

### Test Methods

The methods of testing the resin compositions and the starting materials were as follows:
1. Melt Flow Rate (MFR)
   Using a tester made by Toyo Seiki Seisakusho, MFR was measured at a temperature of 190°C under a load of 2160 g.
2. Hardness
   It was measured by using a Shore D hardness tester (made by Zwick Gmbh & Co.) at 23°C (ASTM D2240).
3. Stiffness
   Using a Tinious Olsen-type stiffness measuring machine made by Toyo Seiki Seisakusho, it was measured at 23°C (ASTM D747).
4. Rebound Resilience
   Using a rebound resilience tester (pendulum-type) made by Ueshima Seisakusho Co., Ltd. it was measured at 23°C.

### Reference Example 1

The ethylene ionomers A and B (50 to 50 parts by weight) were melt-blended at a resin temperature of 200°C with an extruding amount of 4.0 kg/hr in the compounding ratios shown in Table 2 by using a 30 mm-diameter biaxial extruder (made by Ikegai Tekko Co., Ltd.). The properties of the obtained resin compositions were evaluated. The results are shown in Table 2. The results show that rebound resilience was high, but the composition had high hardness and poor softness.

### Examples 1 to 9 and Comparative Examples 1 to 5

Reference Example 1 was repeated, except that the starting materials shown in Table 1 were compounded in the proportions shown in Tables 2 and 3. The results are shown in Tables 2 and 3.

Comparative Examples 1 and 2 showed high rebound resilience, but too low stiffness. Hence, when they were used as a golf ball cover, they are liable to be scratched, and therefore are unsuitable.

Comparative Example 3 had too low in hardness and stiffness, and low rebound resilience. Comparative Examples 4 and 5 had suitable hardness, but since they had too low in rebound resilience, they are unsuitable as a golf ball.

In contrast, the compositions obtained in the Examples had suitable hardness, and high rebound resilience.

### Effect ot the Invention

According to this invention, there can be provided a composition for a golf ball cover material, which has excellent softness and rebound resilience. When such a composition is used as a cover material of a two-piece ball or a three-piece ball, there an be provided a golf all having excellent ball controllability, an excellent feeling, and excellent carrying distance when hit.

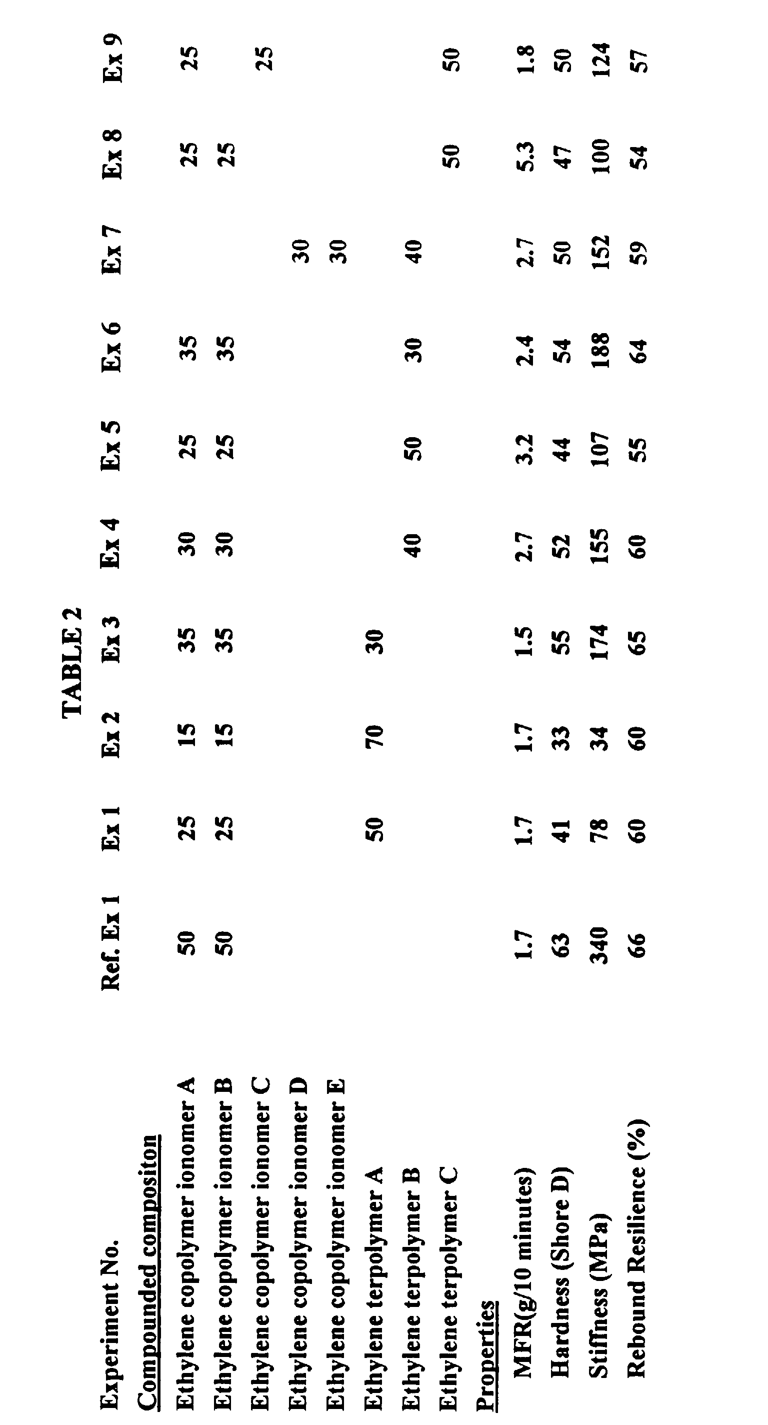

**TABLE 3**

| Experiment No. | Comp Exam 1 | Comp Exam 2 | Comp Exam 3 | Comp Exam 4 | Comp Exam 5 |
|---|---|---|---|---|---|
| Compounded Composition | | | | 25 | 25 |
| Ethylene terpolymer ionomer A | | | | 25 | 25 |
| Ethylene terpolymer ionomer B | | | | | |
| Ethylene terpolymer A | 100 | | | | |
| Ethylene terpolymer B | | 100 | | | |
| Ethylene terpolymer D | | | 100 | 50 | |
| Ethylene terpolymer E | | | | | 50 |

| Properties | | | | | |
|---|---|---|---|---|---|
| MFR (g/10 minutes) | 1.0 | 3.6 | 25.0 | 10.0 | 4.3 |
| Hardness (Shore D) | 41 | 19 | 25 | 46 | 53 |
| Stiffness (MPa) | 34 | 9 | 16 | 87 | 157 |
| Rebound resilience (%) | 56 | 60 | 43 | 48 | 49 |

## Claims

1. A composition for a golf ball cover material which comprises (A) 20 to 80 parts by weight of metal salts of an ethylene/ethylenically unsaturated monocarboxylic acid copolymer having an ethylenically unsaturated monocarboxylic acid content of 10 to 30 percent by weight and a degree of neutralization of at least 25 mole percent and (B) 80 to 20 parts by weight of an ethylene/(meth)acrylate ester/ethylenically unsaturated monocarboxylic acid terpolymer having a (meth)acrylate ester content of 12 to 45 percent by weight and an ethylenically unsaturated monocarboxylic acid content of 0.5 to 5% by weight.

2. The composition according to Claim 1 wherein the ethylenically unsaturated monocarboxylic acid in the terpolymer (B) is selected form the group consisting of acrylic acid, methacrylic acid and monoalkyl esters of maleic acid.

3. The composition according to Claim 1 wherein the metal salts of the ethylene/ethylenically unsaturated monocarboxylic acid copolymer (A) is a mixture of monovalent metal salts and divalent metal salts.

4. The composition according to Claim 3 wherein the ratio of the monovalent etal salts is in the range of 7:3 to 3:7 in weight.

5. The composition according to Claim 1, wherein the metal salts of the ethylene/ethylenically unsaturated monocarboxylic acid copolymer has a melt flow rate of 0.5 to 15 g/10 minutes at 190°C under a load of 2160 g and a Shore D hardness of 55 to 75.

6. The composition according to Claim 1 wherein the terpolymer (B) has a melt flow rate of 0.3 to 20g/10 minutes at 190°C under a load of 2160 g and a Shore D hardness of 10 to 35.

7. A golf ball having a core and a cover wherein the cover material comprises (A) 20 to 80 parts by weight of metal salts of an ethylene/ethylenically unsaturated monocarboxylic acid copolymer having an ethylenically unsaturated monocarboxylic acid content of 10 to 30 percent by weight and a degree of neutralization of at least 25 mole percent and (B) 80 to 20 parts by weight of an ethylene/(meth)acrylate ester/ethylenically unsaturated monocarboxylic acid terpolymer having a (meth)acrylate ester content of 12 to 45 percent by weight and an ethylenically unsaturated monocarboxylic acid content of 0.5 to 5% by weight.

8. The golf ball of Claim 7 wherein the ethylenically unsaturated monocarboxylic acid in the terpolymer (B) is selected form the group consisting of acrylic acid, methacrylic acid and monoalkyl esters of maleic acid.

9. The golf ball of Claim 7 wherein the metal salts of the ethylene/ethylenically unsaturated monocarboxylic acid copolymer (A) are a mixture of monovalent metal salts and divalent metal salts.

10. The golf ball of Claim 9 wherein the ratio of the monovalent metal salts to the divalent metal salts is in the range of 7:3 to 3:7 by weight.

11. The golf ball of Claim 7 wherein the metal salts of the ethylene/ethylenically unsaturated monocarboxylic acid copolymer have a melt flow rate of 0.5 to 15 g/10 minutes at 190°C under a load of 2160 g and a Shore D hardness of 55 to 75.

12. The golf ball of Claim 7 wherein the terpolymer (B) has a melt flow rate of 0.3 to 20g/10 minutes at 190°C under a load of 2160 g and a Shore D hardness of 10 to 35.

## Patentansprüche

1. Zusammensetzung für ein Golfballhüllmaterial, umfassend (A) 20 bis 80 Gewichtsteile an Metallsalzen eines Copolymers von Ethylen und einer ethylenisch ungesättigten Monocarbonsäure mit einem Gehalt an ethylenisch ungesättigter Monocarbonsäure von 10 bis 30 Gew.-% und einem Neutralisationsgrad von wenigstens 25 Mol-% sowie (B) 80 bis 20 Gewichtsteile eines Terpolymers von Ethylen, (Meth)acrylsäureester und einer ethylenisch ungesättigten Monocarbonsäure mit einem Gehalt an (Meth)acrylsäureester von 12 bis 45 Gew.-% und einem Gehalt an ethylenisch ungesättigter Monocarbonsäure von 0,5 bis 5 Gew.-%.

2. Zusammensetzung gemäß Anspruch 1, wobei die ethylenisch ungesättigte Monocarbonsäure im Terpolymer (B) aus der Gruppe ausgewählt ist, die aus Acrylsäure, Methacrylsäure und Monoalkylestern von Maleinsäure besteht.

3. Zusammensetzung gemäß Anspruch 1, wobei es sich bei den Metallsalzen (A) des Copolymers von Ethylen und der ethylenisch ungesättigten Monocarbonsäure um ein Gemisch von Salzen einwertiger Metalle und Salzen zweiwertiger Metalle handelt.

4. Zusammensetzung gemäß Anspruch 3, wobei der Anteil der Salze einwertiger Metalle im Bereich von 7:3 bis 3:7 Gewichtsteilen liegt.

5. Zusammensetzung gemäß Anspruch 1, wobei die Metallsalze des Copolymers von Ethylen und der ethylenisch ungesättigten Monocarbonsäure bei 190°C unter einer Belastung von 2160 g eine Fließfähigkeit von 0,5 bis 15 g/10 Minuten haben und eine Shore-D-Härte von 55 bis 75 besitzen.

6. Zusammensetzung gemäß Anspruch 1, wobei das Terpolymer (B) bei 190°C unter einer Belastung von 2160 g eine Fließfähigkeit von 0,3 bis 20 g/10 Minuten hat und eine Shore-D-Härte von 10 bis 35 besitzt.

7. Golfball, der einen Kern und eine Hülle aufweist, wobei das Hüllmaterial (A) 20 bis 80 Gewichtsteile an Metallsalzen eines Copolymers von Ethylen und einer ethylenisch ungesättigten Monocarbonsäure mit einem Gehalt an ethylenisch ungesättigter Monocarbonsäure von 10 bis 30 Gew.-% und einem Neutralisationsgrad von wenigstens 25 Mol-% sowie (B) 80 bis 20 Gewichtsteile eines Terpolymers von Ethylen, (Meth)acrylsäureester und einer ethylenisch ungesättigten Monocarbonsäure mit einem Gehalt an (Meth)acrylsäureester von 12 bis 45 Gew.-% und einem Gehalt an ethylenisch ungesättigter Monocarbonsäure von 0,5 bis 5 Gew.-% umfaßt.

8. Golfball gemäß Anspruch 7, wobei die ethylenisch ungesättigte Monocarbonsäure im Terpolymer (B) aus der Gruppe ausgewählt ist, die aus Acrylsäure, Methacrylsäure und Monoalkylestern von Maleinsäure besteht.

9. Golfball gemäß Anspruch 7, wobei es sich bei den Metallsalzen (A) des Copolymers von Ethylen und der ethylenisch ungesättigten Monocarbonsäure um ein Gemisch von Salzen einwertiger Metalle und Salzen zweiwertiger Metalle handelt.

10. Golfball gemäß Anspruch 9, wobei das Gewichtsverhältnis der Salze einwertiger Metalle zu den Salzen zweiwertiger Metalle im Bereich von 7:3 bis 3:7 liegt.

11. Golfball gemäß Anspruch 7, wobei die Metallsalze des Copolymers von Ethylen und der ethylenisch ungesättigten Monocarbonsäure bei 190°C unter einer Belastung von 2160 g eine Fließfähigkeit von 0,5 bis 15 g/10 Minuten haben und eine Shore-D-Härte von 55 bis 75 besitzen.

12. Golfball gemäß Anspruch 7, wobei das Terpolymer (B) bei 190°C unter einer Belastung von 2160 g eine Fließfähigkeit von 0,3 bis 20 g/10 Minuten hat und eine Shore-D-Härte von 10 bis 35 besitzt.

## Revendications

1. Une composition pour une matière d'enveloppe de balle de golf qui comprend (A) 20 à 80 parties en poids de sel métallique d'un copolymère éthylène/acide monocarboxylique éthyléniquement insaturé ayant une teneur en acide monocarboxylique éthyléniquement insaturé de 10 à 30 pour cent en poids et un degré de neutralisation d'au moins 25 moles pour cent et (B) 80 à 20 parties en poids d'un terpolymère éthylène/ester (méth)acrylique/acide monocarboxylique éthyléniquement insaturé ayant une teneur en ester (méth)acrylique de 12 à 45 pour cent en poids et une teneur en acide monocarboxylique éthyléniquement insaturé de 0,5 à 5 % en poids.

2. La composition selon la revendication 1, dans laquelle l'acide monocarboxylique éthyléniquement insaturé du terpolymère (B) est choisi dans le groupe formé par l'acide acrylique, l'acide méthacrylique et les esters monoalkyliques d'acide maléique.

3. La composition selon la revendication 1, dans laquelle le sel métallique du copolymère éthylène/acide monocarboxylique éthyléniquement insaturé (A) est un mélange de sels de métal ou métaux monovalents et de sels de métal ou métaux divalents.

4. La composition selon la revendication 3, dans laquelle le rapport des sels de métal ou métaux monovalents est compris dans l'intervalle de 7:3 à 3:7 en poids.

5. La composition selon la revendication 1, dans laquelle le sel métallique du copolymère éthylène/acide monocarboxylique éthyléniquement insaturé a un indice de fluidité à chaud de 0,5 à 15 g/10 minutes à 190°C sous une charge de 2160 g et une dureté Shore D de 55 à 75.

6. La composition selon la revendication 1, dans laquelle le terpolymère (B) a un indice de fluidité à chaud de 0,3 à 20 g/10 minutes à 190°C sous une charge de 2160 g et une dureté Shore D de 10 à 35.

7. Une balle de golf ayant un noyau et une enveloppe, dans laquelle la matière d'enveloppe comprend (A) 20 à 80 parties en poids de sel métallique d'un copolymère éthylène/acide monocarboxylique éthyléniquement insaturé ayant une teneur en acide monocarboxylique éthyléniquement insaturé de 10 à 30 pour cent en poids et un degré de neutralisation d'au moins 25 moles pour cent et (B) 80 à 20 parties en poids d'un terpolymère éthylène/ester (méth)acrylique/acide monocarboxylique éthyléniquement insaturé ayant une teneur en ester (méth)acrylique de 12 à 45 pour cent en poids et une teneur en acide monocarboxylique éthyléniquement insaturé de 0,5 à 5 % en poids.

8. La balle de golf de la revendication 7, dans laquelle l'acide monocarboxylique éthyléniquement insaturé du terpolymère (B) est choisi dans le groupe formé par l'acide acrylique, l'acide méthacrylique et les esters monoalkyliques d'acide maléique.

9. La balle de golf de la revendication 7, dans laquelle le sel métallique du copolymère éthylène/acide monocarboxylique éthyléniquement insaturé (A) est un mélange de sels de métal ou métaux monovalents et de sels de métal ou métaux divalents.

10. La balle de golf de la revendication 9, dans laquelle le rapport des sels de métal ou métaux monovalents aux sels de métal ou métaux divalents est compris dans l'intervalle de 7:3 à 3:7 en poids.

11. La balle de golf de la revendication 7, dans laquelle le sel métallique du copolymère éthylène/acide monocarboxylique éthyléniquement insaturé a un indice de fluidité à chaud de 0,5 à 15 g/10 minutes à 190°C sous une charge de 2160 g et une dureté Shore D de 55 à 75.

12. La balle de golf de la revendication 7, dans laquelle le terpolymère (B) a un indice de fluidité à chaud de 0,3 à 20 g/10 minutes à 190°C sous une charge de 2160 g et une dureté Shore D de 10 à 35.
